# EUROPEAN PATENT APPLICATION

(11) **EP 2 366 672 A2**
(43) Date of publication of application: **21.09.2011**
(21) Application number: 11163922.5
(22) Date of filing: 07.12.2007
(51) Int. Cl.: C02F 3/22, C02F 11/02, C02F 3/12, B01D 21/00

(54) **Vertical reactor for wastewater treatment**

(30) Priority: 07.12.2006 IT RM20060224 U
(62) Divisional of application: 07866790.4
(71) Applicant: Eureka Group s.r.l., 000185 Roma (IT)
(72) Inventor: Piccoli, Massimo, 00184 ROMA (IT)
(74) Representative: Tiburzi, Andrea

(57) **Abstract**

The present invention relates to a depurator for civil and industrial refluent water with vertical reactor (2), comprising a sewage lifting station; a rotating drum fine grid; tanks for removal of sand, oil, nitrogen; nitrification, oxidation, biological and homogenisation tanks; oxygen air diffusers; a vertical reactor (2); a first air lift (17) suitable to make suspended mud and sewage recirculating, drawing at a pre-set depth within said reactor; an air pump within said reactor (2); one or more gaseous oxygen air diffusers within said reactor (2), at different levels; one or more high prevalence compressors supplying said one or more air diffusers; one or more tubes suitable to take mixture samples at different depth; a flotation tank (7); one or more adjustable openings, provided with motorised and manual sluice gates for recirculation of floated matter created within and outside the floated matter; a plurality of lamellar packs (8) in the flotation tank (7); a series of hoppers in the flotation tank (7); a submerged pump for recirculating mud; a floated matter mud collection well (5); a mud recirculation pump oxidation at the de-nitrification of dehydration; characterised in that it comprises a second air lift (1) suitable to recirculating suspended mud and sewage drawing at a depth lower that the maximum depth of the first air lift (17) within said reactor (2); suspended bodies suitable to permit increase of adhering flora; and means for introduction of oxygen (0₂) within said reactor in case of sewages particularly rich of carbon (C) and/or with BOD5 concentration higher than 500-1000 ppm.

## Description

Subject matter of the present invention are improvements of civil and industrial refluent water depurators the function of which is that of making water subjected to treatment complying with what is provided by present rules.

Apparatuses are known since many years in the industrial water treatment field permitting treatment of civil and industrial refluent water.

Some of these apparatuses are based on the so-called deep well type.

Examples of these apparatuses or methods are described in DE patent 9304698, EP patent 0 552 134 and PCT application PCT/IT03/00630.

Particularly, plants realised on the basis of the teachings described in PCT/IT03/00630 have introduced remarkable improvements in this field, but have also evidenced some problems that will be described in the following.

It has been noted that plants designed for about 20,000 - 30,000 inhabitants, wherein pluvial water and industrial wastes are conveyed, particularly harmful for development and maintenance of bacterial flora useful for depuration, it is very difficult adjustment of mud recirculation floating within dissipator to homogenisation balancing. Manual adjustment made in small plants, up to 5,000 inhabitants, requires few minutes each day, while the same adjustment operation in bigger plants must be carried out more than once a day and requires a longer time, thus requiring more personnel for simple routine operations.

A second problem of this plant is that floated matter, when large flow rates are treated, flows irregularly upward, hindering transfer of solids from dissipator to balancing.

Further, great variability of refluent conveyed to the plants causes difficulties for adjustment of amount of air input within the vertical reactor, since active mud beds subjected to reduction of biodegradable substances and of suspended solids change their consistency and localisation within the same reactor.

Deep well system was particularly efficient in reduction of Biological Oxygen Demand (in the following BOD5), i.e. when polluting substances are rich of carbon C. Vice versa, reduction of Nitrogen N has required a long study from which it has been noted that bacteria (*nitosomonas and nitrobacter*) provided to this aim do not support stress due to quick pressure reduction occurring along the reactor air lift during extraction from the bottom of receptor to dissipator. When realising a deep well plant for treatment of sweet industry refluents with inlet BOD5 concentration even higher than 10,000 Mg/I, it has been noted the difficulty of obtaining an Oxygen O₂ exchange between introduce air and sewage. This caused a difficulty for growth of active mud and a low quality of the same with consequent unsatisfying results and in any case not such to permit respecting outlet parameters provided by existing rules, so that, after accurate investigations, it has been decided to insufflate within the reactor gases different with respect to air, or in any case with more oxidising substances.

While making some specific realisations, it has been noted that it is possible simplifying and reducing number and in any case power of pumps for recirculating sedimented mud. Particular geometry of some systems permits carrying out such a function by gravity.

Problems shortly mentioned in the above have brought to studying the innovation according to the present invention, ensuring their solution.

Operation of the plant is roughly described in the following, so as to better understand the improvements introduced.

Sewage arriving from lifting station wherein electro pumps are installed to send it to the rotating drum fine grid preventing to each coarse solid particle to pass to the following steps and to create possible clogging and consequent plant stop; meshed material is sent within a box after possible compaction, while sewage arrives to sand removal and oil removal treatments, to arrive then to the biological nitrogen removal and homogenisation; air and oxygen diffusers are provided in series in this tank, and other diffusers, that can vary depending on the sewage to be treated, supplied by low prevalence blowers. Input causes mixing of the mass, its chemical and biological oxidation and dissolution of other possible additive gases.

A series of electronic detectors, connected with indicator instruments, is present in the tank, automatically adjusting operation times of blowers by timer and a series of valves. Vertical reactor is realised on the bottom of the oxidation/homogenisation tank, in a planimetric position, that can be different on the basis of the sewage to be subjected to treatment, within which sewage arrives by gravity from upward downward all along the same reactor length.

An air lift pump is installed within the reactor, as well as a series of gaseous oxygen air diffusers, positioned at the various levels and supplied by high prevalence compressors.

A second air lift is positioned within the reactor to help the first one.

Air lifts mix water-gas-mood mixture within modified geometry floated matter, which is provided with adjustable motorised sluice gates for making recirculation of floated matter created either within the floated matter and outside the same.

Final sedimentation of the plant is realised within the floated matter tank, separated by suitable adjustable motorised sluice gates, served by suitably sized and studied lamellar packs, and by a series of hoppers making it easier mud outflow in the taking up zone for the subsequent recirculation by a submerged electro-pump. Floated matter recirculation occurs by gravity.

It is therefore specific object of the present invention an improved depurator for civil and industrial refluent water with vertical reactor, comprising: a sewage lifting station; a rotating drum fine grid; tanks for removal of sand, oil, nitrogen; nitrification, oxidation, biological and homogenisation tanks; oxygen air diffusers; a vertical reactor; a first air lift suitable to make suspended mud and sewage recirculating, drawing at a pre-set depth within said reactor; an air pump within said reactor; one or more gaseous oxygen air diffusers within said reactor, at different levels; one or more high prevalence compressors supplying said one or more air diffusers; one or more tubes suitable to take mixture samples at different depth; a flotation tank; one or more adjustable openings, provided with motorised and manual sluice gates for recirculation of floated matter created within and outside the floated matter; a plurality of lamellar packs in the sedimentation tank; a series of hoppers in the sedimentation tank; a submerged pump for recirculating mud; a floated matter mud collection well; a mud recirculation pump oxidation at the de-nitrification of dehydration; characterised in that it comprises a second air lift suitable to recirculating suspended mud and sewage drawing at a depth lower that the maximum depth of the first air lift within said reactor; suspended bodies suitable to permit increase of adhering flora; and means for introduction of oxygen (O₂) within said reactor in case of sewages particularly rich of carbon (C) and/or with BOD5 concentration higher than 500-1000 ppm. It must be remembered that BOD5 value of a domestic sewage is about 150 - 250 mg/l.

Further embodiments are described in the enclosed dependent claims 2 - 8.

The present invention will be now described, for illustrative but not limitative purposes, according to its preferred embodiments, with particular reference to the figures of the enclosed drawings, wherein:
figure 1 shows a section view of a portion of a civil and industrial refluent water depurator according to the invention with an auxiliary air lift;
figure 2 shows a section view of motorisation of a sluice gate;
figure 3 shows a section view of a dissipator;
figure 4 shows the verification and control system for suspended fluid beds in reactor;
figure 5 shows a section view of the Oxygen O₂ balancing and supply tank within the reactor;
figure 6 shows a section view of a portion of the civil and industrial water depurator with the gravity sedimented mud recirculation shown schematically; and
figure 7 shows a plan view of depurator according to figure 6.

Plant having the operation features described in the above has the at least partly already mentioned modifications, that will be better described in the following.

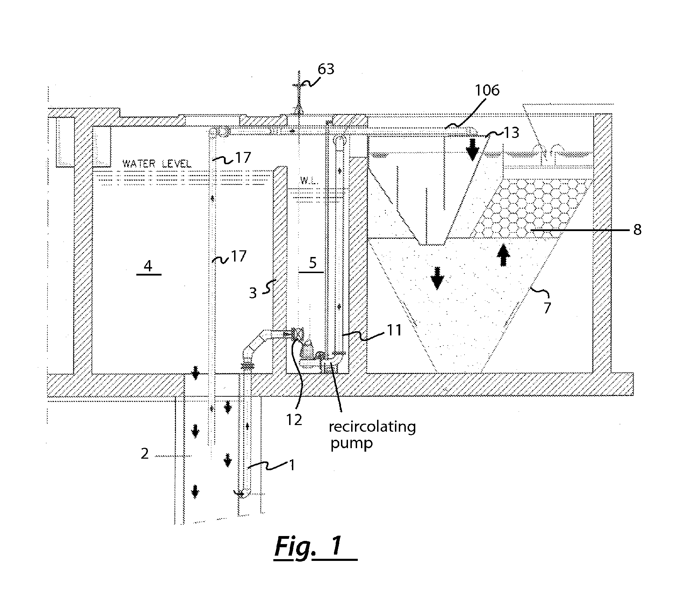

In figure 1 it is shown a part of the vertical reactor civil and industrial refluent water depurator, wherein it is possible noting the auxiliary air lift 1, at a depth of 20-30 m, aside reactor 2, permitting recirculating suspended mud and sewage "drawing" at a depth lower than the maximum depth of reactor 2. This operation permits using mud with more flexible oxidation and concentration features, thus solving at the same time floating and concentration problems of bacteria stocks that are few resistant to stress during lifting through reactor 2 air lift 1. recirculation occurs by gravity thanks to water head of about 2 - 3 m always present between flotation - sedimentation tank and the oxidation tank.

Figure 1 also shows a balancing tank 4 and a floating mud well 5, separated by a septum 3 that can be moved by a motion system 6. further, it is observed a floated matter sedimentation tank, within which lamellar packs 8 are provided, and provided with channel for collection of water subjected to treatment. Finally, figure also shows tube 11 of mud to be subjected to treatment. Figure also shows main air lift 17 suitable to recirculating suspended mud and sewage, drawing at a depth deeper than the one of said reactor 2 second air lift 1.

Said auxiliary air lift 1 has a valve 12 at its top.

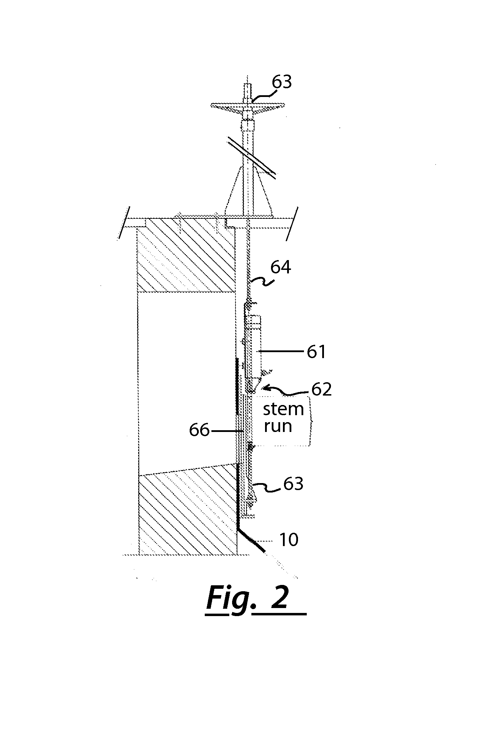

Motorisation system 6 is shown in figure 2, for floated matter recirculation sluice gates 66. Said system 6 permit manoeuvring said recirculation and cleaning sluice gates 66 through a suitable software even in a fully automatic or semi-automatic way according to the needing, thus permitting a remarkable labour saving. Motorisation system 6 comprises an electric actuator 61 suitable piloting a piston - cylinder group 62. a manual adjustment wheel 63 is present above said motorisation system 6, mechanically connected with a first and a second screw 64, 65 (such as an M10 screw). Finally, a floated matter is present on the bottom.

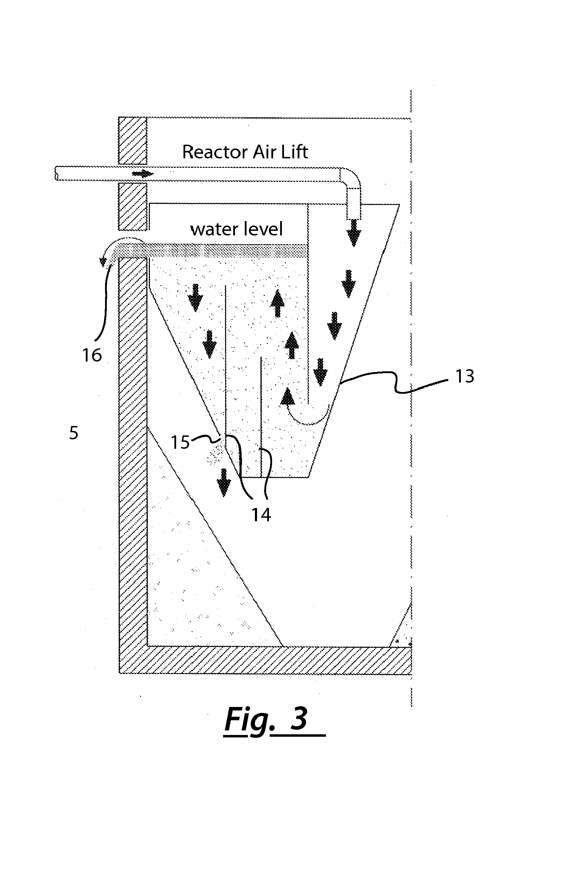

Figure 3 shows a section of the modification introduced to geometry of dissipator - floated matter 13, promoting floated matter circulation created on the dissipator surface 13, preventing formation of surface crust which is difficult to dissipate.

Geometry of floated matter dissipator 13 is conformed to the operative needings. Effect obtained is a substantial deviation of the ascendant flow in the surface zone far from recirculation sluice gate, creating a turbulence promoting floated matter outflow.

New geometry permits solving, along with motorisation of recirculation sluice gates, problem of cleaning free surfaces of dissipator, thus avoiding intervention of an operator.

Said flotation dissipator 13 comprises inside deflector baffles 14 for realisation of said turbulences. It has a lower opening 15 for passage of sedimentation tank for liquid clarified and free from floated matter material.

Floated matter material accumulating on surface of said floated matter dissipator 13 overflows within flotating mud well 5.

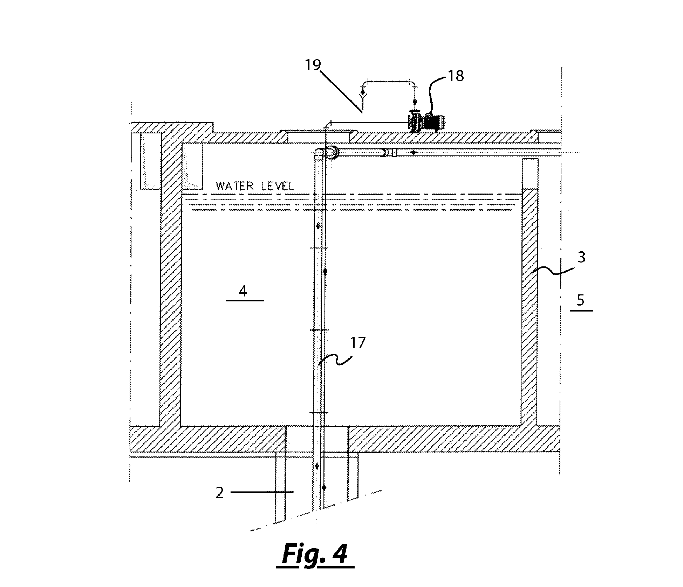

Figure 4 shows the verification and control system of suspended fluids in reactor and consequent insufflation variation of air within the same. Realisation of said control, requiring installation of suitable tubes comprising main lift air 17 having a diameter of 1/2" - 1 " along with main extraction air lift 17 and suitable lifting pumps, as well as cleaning systems for the apparatuses.

According to the modifications of the present invention, it is also provided introduction of suspended bodies within oxidation - homogenisation tank thus permitting increase of adhering flora. Suspended bodies, usually bodies comprised of plastic material resistant to acids, are the ideal environment for supporting every kind of bacteria, including those for nitrification (nitrosomonas, nitrobacter).Their introduction can simplify realisation of the plant and does not require any structural modification, but some simplifications, since manufacturer provides them packaged and they must be simply poured within oxidation through inspection manhead provided on the upper slab. Furthermore, their introduction depends on the kind of refluent to be subjected to treatment. In some cases it will be necessary realisation of suitable traps preventing to the bodies to escape due to their specific weight lower than the one of sewage.

A further possibility of optimising the plant efficiency, particularly as far as costs are concerned, is due to the possibility of varying reactor 2 depth on the basis of the kind of refluent to be subjected to treatment, and thus realising a lower penetration if the most favourable cases.

Always referring to figure 4, it is observed at the above a pump 18 suitable to take sample from reactor 2, and to send them within containers 19 for measuring amount of mud present.

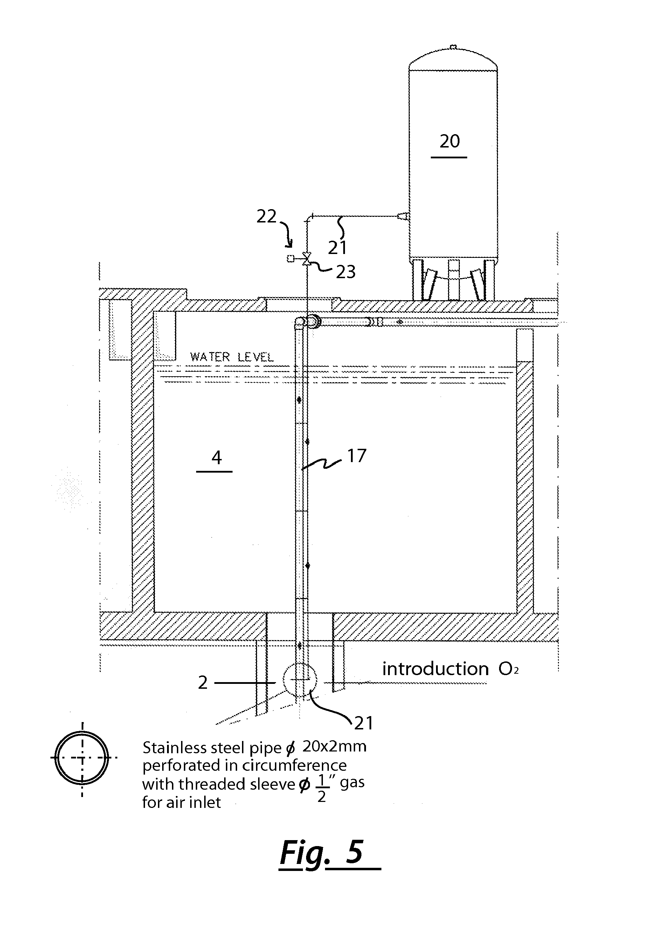

Plant permitting introduction of oxygen O₂ within reactor 2 is shown in figure 5. this operation depends on the kind of sewage to be subjected to treatment. It is particularly indicated for sewages particularly rich of Carbon C and in any case with a concentration higher than 500 - 1000 ppm. This application permits simplification of distribution of air on the bottom of balancing tank 4 and reduction of excess mud.

Oxygen O₂ stocking and supply reservoir 20 is shown in figure 5, from which a duct 21 starts, provided with an adjustment group 22 comprising a valve 23, an adjustment valve 22, the end 21' of which reaches reactor 2. depth of oxygen O₂ input point varies on the basis of the kind of refluent.

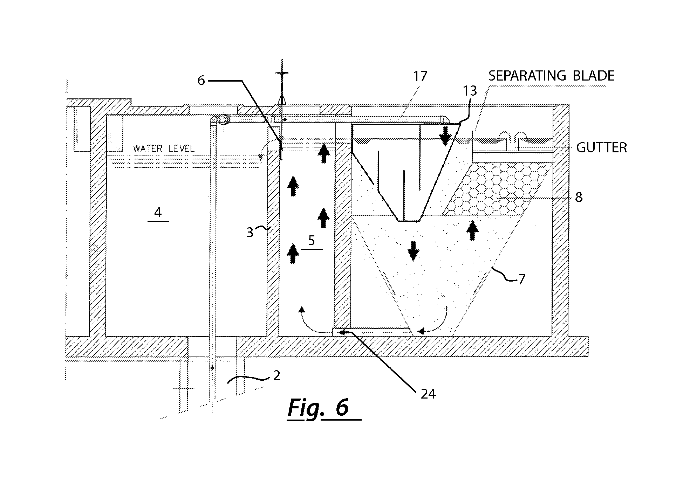

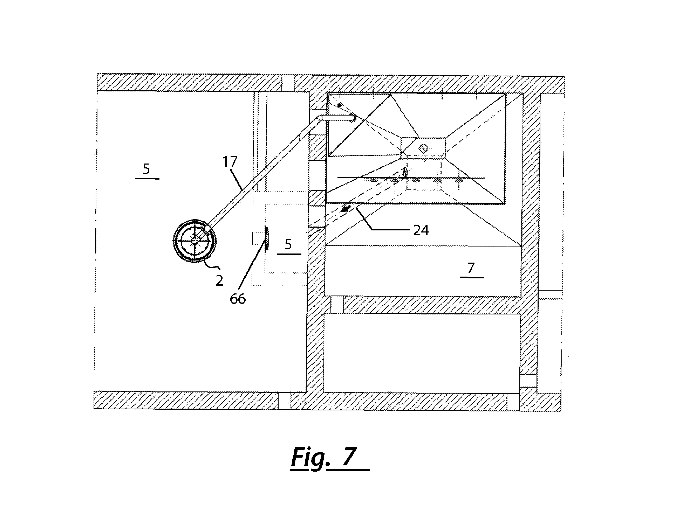

Finally, figures 6 and 7 show recirculation of mud by gravity and particularly it is shown how to exploit the higher level sedimentation and oxidation - balancing situation for eliminating recirculation pumps and remarkably reducing their use, thus saving power and operation. It is evident that in a traditional plant the situation is the opposite (higher oxidation than sedimentation) so that it is impossible eliminating use of recirculation.

It is observed a mud passage tube 24 connected between flotating sedimentation tank 7 and floating mud well 5.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Depurator for civil and industrial refluent water with vertical reactor (2), comprising:
a sewage lifting station; a rotating drum fine grid; tanks for removal of sand, oil, nitrogen; nitrification, oxidation, biological and homogenisation tanks; oxygen air diffusers; a vertical reactor (2); a first air lift (17) suitable to make suspended mud and sewage recirculating, drawing at a pre-set depth within said reactor; an air pump within said reactor (2); one or more gaseous oxygen air diffusers within said reactor (2), at different levels; one or more high prevalence compressors supplying said one or more air diffusers; one or more tubes suitable to take mixture samples at different depth; a flotation tank (7); one or more adjustable openings, provided with motorised and manual sluice gates for recirculation of floated matter created within and outside the floated matter; a plurality of lamellar packs (8) in the flotation tank (7); a series of hoppers in the flotation tank (7); a submerged pump for recirculating mud; a floated matter mud collection well (5); a mud recirculation pump oxidation at the de-nitrification of de-hydration; **characterised in that** it comprises:
a second air lift (1) suitable to recirculating suspended mud and sewage drawing at a depth lower that the maximum depth of the first air lift (17) within said reactor (2);
suspended bodies suitable to permit increase of adhering flora;
and
means for introduction of oxygen (O₂) within said reactor in case of sewages particularly rich of carbon (C) and/or with BOD5 concentration higher than 500-1000 ppm.

2. Civil and industrial refluent water depurator according to claim 1, **characterised in that** said second air lift (1) has a length lower than said first air lift (17).

3. Civil and industrial refluent water depurator according to one of the preceding claims, **characterised in that** floated recirculation sluice gates (66) are motorised by motors controlled by a dedicated software.

4. Civil and industrial refluent water depurator according to one of the preceding claims, **characterised in that** dissipator floated matter (13) has a modified geometry, so as to cause a substantial deviation of ascendant flow in the surface zone far from the recirculation sluice gate (66) thus creating a turbulence promoting outflow of floated matter.

5. Civil and industrial refluent water depurator according to one of the preceding claims, **characterised in that** suitable tubes, along with the extraction air lift (17), lifting pumps and cleaning systems for apparatuses permit verifying and controlling fluid beds within said reactor (2).

6. Civil and industrial refluent water depurator according to claim 5, **characterised in that** diameter of said tubes is 1/2" - 1 ".

7. Civil and industrial refluent water depurator according to one of the preceding claims, **characterised in that** depth of said reactor (2) varies on the basis of the kind of refluent to be subjected to treatment.

8. Civil and industrial refluent water depurator according to one of the preceding claims, **characterised in that** it is provided recirculation of mud sedimented by gravity.
